# EUROPÄISCHE PATENTSCHRIFT

(11) **EP 1 257 381 B1**
(45) Veröffentlichungstag und Bekanntmachung des Hinweises auf die Patenterteilung: **06.05.2004**
(21) Anmeldenummer: 01913707.4
(22) Anmeldetag: 21.02.2001
(51) Int. Cl.: B23K 9/20

(54) **VERFAHREN ZUM ANSCHWEISSEN EINES BOLZENS AN EINEM WERKSTÜCK UND BOLZENSCHWEISSVORRICHTUNG**
METHOD FOR WELDING A BOLT ONTO A WORKPIECE AND A BOLT-WELDING DEVICE
PROCEDE DE SOUDAGE D'UN GOUJON SUR UN PIECE ET DISPOSITIF DE SOUDAGE DE GOUJONS

(30) Priorität: 21.02.2000 DE 10007836
(43) Veröffentlichungstag der Anmeldung: 20.11.2002
(73) Patentinhaber: Nelson Bolzenschweiss-Technik GmbH & Co. KG, 58285 Gevelsberg (DE)
(72) Erfinder: MADSAK, Jürgen, 58339 Breckerfeld (DE); CITRICH, Ulrich, 58285 Gevelsberg (DE); HAILER, Steffen, 44789 Bochum (DE)
(74) Vertreter: Eder, Thomas, Dr.-Ing.
(86) Internationale Anmeldenummer: PCT/DE2001/000665
(87) Internationale Veröffentlichungsnummer: WO 2001/062425

(56) Entgegenhaltungen:
- GB-A- 2 268 900
- US-A- 3 414 699
- PATENT ABSTRACTS OF JAPAN vol. 1999, no. 14, 22. Dezember 1999 (1999-12-22) & JP 11 245038 A (DAIHEN CORP;DAIHEN STUD KK), 14. September 1999 (1999-09-14)

## Beschreibung

Die Erfindung betrifft ein Verfahren zum Anschweißen eines Bolzens an einem Werkstück mittels einer Bolzenschweißvorrichtung, die wenigstens eine mit dem zu verschweißenden Bolzen verbundene Antriebsachse und wenigstens einen elektromagnetischen, axial wirkenden Linearantrieb mit wenigstens einer Spule hat.

Ein Verfahren zum Anschweißen ist beispielsweise aus der DE 43 24 223 A1 bekannt. Hierbei sind zwei in entgegengesetzte Richtungen wirkende elektromagnetische Antriebsvorrichtungen vorgesehen, wobei eine in Vorschubrichtung und die andere in Gegenrichtung wirkt. Soll die Antriebsachse neu positioniert werden, so wird der ohnehin stärker ausgebildete Antrieb, welcher in Vorschubrichtung wirkt, eine solche Kraft auf die Antriebsachse aufbringen, dass es zum Verschieben der Antriebsachse kommt, wobei während des Verschiebens der andere Linearantrieb ebenfalls wirkt. Da die beiden Linearantriebe gegeneinander wirken, ist zum Festlegen einer Position ein Kräfteausgleich notwendig. Das bedeutet aber, dass eine erhebliche elektrische Energie zur Verfügung stehen muss, was zu verstärkter Wärmeentwicklung führt, insbesondere bei Schrägstellung der Antriebsachse.

Die DE 195 29 350 schlägt deshalb vor, immer nur einen der beiden Linearantriebe zu aktivieren. Bei diesem Verfahren ist es schwer, die Antriebsachse in Zwischenpositionen zwischen der Grundposition (vollständig zurückgezogene Antriebsachse) und Endstellung (vollständig ausgefahrene Antriebsachse) schnell und sicher zu verfahren. Es kommt vielmehr zu einem sogenannten Einschwingverhalten der Antriebsachse um die Sollposition. Darüber hinaus kann die Antriebsachse auch in bestimmten Schweißlagen (Wannen- oder Über-Kopf-Lage) oszillieren.

Die Erfindung schafft ein Verfahren und eine Vorrichtung, insbesondere zur Durchführung des Verfahrens, die einfach sind und eine schnelle, exakte Positionierung der Antriebsachse sicherstellen. Darüber hinaus werden beim erfindungsgemäßen Verfahren und bei der erfindungsgemäßen Vorrichtung Wärmeprobleme kaum noch auftreten. Auch die Reproduzierbarkeit des Schweißvorgangs wird in allen Schweißlagen verbessert.

Das erfindungsgemäße Verfahren sieht hierzu vor, dass beim Positionieren der Antriebsachse eine wahlweise zuschaltbare Kraft durch Schaffung eines strukturellen Kraftflussweges zwischen Antriebsachse und Gehäuse auf die Antriebsachse aufgebracht wird, wobei die Kraft einer Verschiebung der Antriebsachse wenigstens in Vorschubrichtung einen Widerstand entgegensetzt. Das erfindungsgemäße Verfahren sieht vor, dass Gehäuse und Antriebsachse direkt oder indirekt strukturell, d.h. mechanisch miteinander gekoppelt werden können und über diese Koppelung eine Kraft auf die Antriebsachse ausgeübt werden kann, die einer Verschiebung der Antriebsachse zumindest in Vorschubrichtung einen Widerstand entgegensetzt. Damit setzt sich die Erfindung klar von Verfahren ab, die mittels zweiter entgegengesetzt wirkender elektromagnetischer Linearantriebe die Antriebsachse positionieren wollen oder Verfahren, bei denen eine Feder permanent eine Rückstellkraft ausübt. Bei der Erfindung dient der Widerstand der Positionierung der Antriebsachse oder der Erleichterung der Positionierung. Über den Widerstand kann beispielsweise eine Dämpfung der Bewegung in eine Soll-Position erreicht werden, so dass das sogenannte Einschwingen in die Soll-Position reduziert oder ganz verhindert wird. Mittels der zuschaltbaren Kraft kann die Antriebsachse auch in der zurückgezogenen Grundstellung lagesicher positioniert werden, d.h. die elektromagnetische Antriebseinrichtung kann annähernd oder ganz stromlos geschaltet werden, was wiederum die Wärmeentwicklung verringert.

Darüber hinaus kann mittels der zuschaltbaren Kraft auch in jeder anderen Stellung, gerade in Zwischenstellungen zwischen Grund- und Endstellung, die Antriebsachse gehalten werden. Auch in diesen Zwischenstellungen kann dann der elektromagnetische Linearantrieb stromlos sein.

Vorzugsweise ist die Größe der Kraft variabel. Durch die Einstellbarkeit der Kraft ist es möglich, der Verschiebung der Antriebsachse wahlweise einen solchen Widerstand entgegenzusetzen, dass deren Bewegung gedämpft wird oder dass eine Bewegung verhindert wird, was bedeutet, dass die Antriebsachse durch die Kraft lagesicher positioniert wird.

Mittels der Kraft kann die Schwerkraft der Antriebsachse und der mit ihr gekoppelten, verschieblichen Teile teilweise oder vollständig kompensiert werden. Wird beispielsweise überkopf gearbeitet, ist die Antriebsachse also mit dem zu verschweißenden Bolzen voraus nach oben gerichtet, verhindert die Kraft ein nach hinten und nach unten Gleiten der Antriebsachse aufgrund deren Eigengewichts. Wenn die Antriebsachse mit dem Bolzen voraus nach unten gerichtet ist, kann eine solche Kraft entgegen der Vorschubrichtung auf die Antriebsachse aufgebracht werden, das diese Kraft die durch das Eigengewicht der Antriebsachse samt der zusammen mit ihr verschobenen Teile verursachte Verschiebekraft wenigstens teilweise oder sogar vollständig kompensiert. Damit muss der elektromagnetische Linearantrieb weniger elektrische Leistung aufnehmen.

Wie bereits erläutert, sollte vorzugsweise bei zugeschalteter Kraft dem Linearantrieb weniger elektrische Energie zugeführt werden als ohne zugeschaltete Kraft, um die notwendige Antriebsenergie zu reduzieren.

Die Kraft kann beispielsweise eine Klemmkraft sein, die zwischen Antriebsachse und einem gehäusefesten Teil, darunter fällt auch das Gehäuse selbst, aufgebracht wird. Hierzu ist beispielsweise ein hydraulischer, pneumatischer oder auch elektrischer Antrieb, z.B. in Form eines Hubmagneten, geeignet.

Die Kraft kann quer zur Vorschubrichtung oder entgegengesetzt zu ihr gerichtet sein. In letzterem Fall könnte durch die Kraft auch eine Rückstellkraft in eine Ausgangslage definiert werden.

Eine Ausgestaltung der Erfindung sieht vor, dass die Kraft relativ zur Vorschubkraft des Linearantriebs so dosiert wird, dass sie eine Dämpfungsfunktion bei Verfahren der Antriebsachse in eine Soll-Position ausübt.

Die Erfindung betrifft darüber hinaus eine Bolzenschweißvorrichtung, insbesondere zur Durchführung des erfindungsgemäßen Verfahrens, mit wenigstens einer mit dem zu verschweißenden Bolzen verbundenen Antriebsachse, einem elektromagnetischen, axial wirkenden Linearantrieb mit wenigstens einer Spule, wobei die Antriebsachse Teil des Linearantriebs ist. Die erfindungsgemäße Bolzenschweißvorrichtung zeichnet sich dadurch aus, dass eine zuschaltbare Einrichtung an der Antriebsachse oder dem Gehäuse vorgesehen ist und in zugeschaltetem Zustand an dem Gehäuse bzw. an der Antriebsachse angreift, eine Kraft auf die Antriebsachse ausübt und einer Verschiebung der Antriebsachse zumindest in Vorschubrichtung einen Widerstand entgegensetzt.

Die Einrichtung kann, wie anhand des Verfahrens zuvor schon erläutert, vorzugsweise die Größe des Widerstands verändern.

Gemäß einer Ausgestaltung der Erfindung ist die Einrichtung eine quer zur Antriebsachse wirkende Klemmeinrichtung, beispielsweise in Form eines hydraulischen oder pneumatischen Kolben-Zylinder-Antriebs.

Wenn der Kolben-Zylinder-Antrieb mit einem Ventil gekoppelt ist, welches den Zylinder drucklos schalten kann, kann der Antrieb einer Verschiebung auch keinen Widerstand oder nur einen sehr geringen Widerstand entgegensetzen.

Eine weitere Ausgestaltung der Erfindung sieht vor, dass ein Wegmesssystem und eine Steuerung vorgesehen sind, wobei die Steuerung mit dem Wegmesssystem gekoppelt ist und die Einrichtung ansteuern kann. Über das Wegmesssystem lässt sich ermitteln, ob die Antriebsachse schräg zur horizontalen Ebene steht. Das Wegmesssystem hat in diesem Fall eine Doppelfunktion. Sobald eine Schrägstellung ermittelt wird, kann die Einrichtung so angesteuert werden, dass sie einem Verschieben der Achse entgegenwirkt und/oder die Wirkung des Eigengewichts der Achse kompensiert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 eine Längsschnittansicht durch eine erste Ausführungsform der erfindungsgemäßen Bolzenschweißvorrichtung, die nach dem erfindungsgemäßen Verfahren arbeitet;
- Fig. 2 eine Längsschnittansicht durch eine zweite Ausführungsform der erfindungsgemäßen Bolzenschweißvorrichtung, die ebenfalls nach dem erfindungsgemäßen Verfahren arbeitet, und
- Fig. 3 eine Längsschnittansicht des Linearantriebs der Bolzenschweißvorrichtung nach Fig. 1.

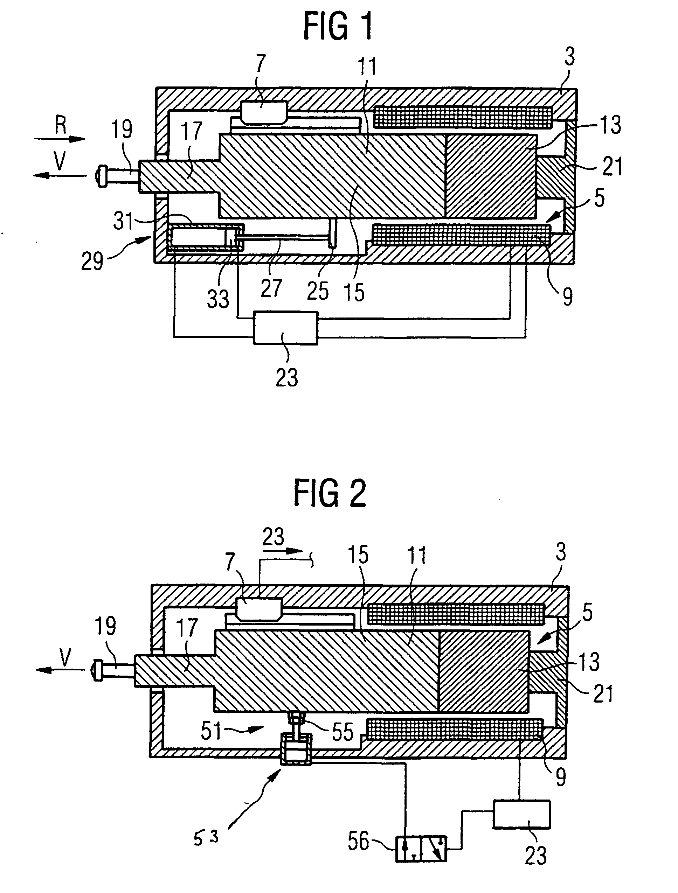

In Fig. 1 ist eine Bolzenschweißvorrichtung, genauer das Schweißwerkzeug einer Bolzenschweißvorrichtung stilisiert dargestellt, das ein Gehäuse 3, einen im Gehäuse 3 vorgesehenen, elektromagnetischen, axial wirkenden Linearantrieb 5 und ein Wegmesssystem 7 aufweist. Die Steuerung der Bolzenschweißvorrichtung ist nicht gezeigt. Der Linearantrieb 5 besteht aus einer oder mehreren im Gehäuse 3 befestigten zylindrischen Spulen 9 und einer sich in das Innere der Spulen 9 erstreckenden, jedoch auch aus ihr herausragenden Antriebsachse 11. Die Antriebsachse 11 wiederum besteht aus mehreren Abschnitten, nämlich einem hinteren Abschnitt 13 in Form eines oder mehrerer hintereinander angeordneter Permanentmagneten und einem langgestreckten, sich daran anschließenden zylindrischen Abschnitt 15, der ein vorderes Ende hat. welches als Bolzenhalter 17 ausgebildet ist. In dem Bolzenhalter 17 ist ein zu verschweißender Bolzen 19 gesteckt und gehaltert.

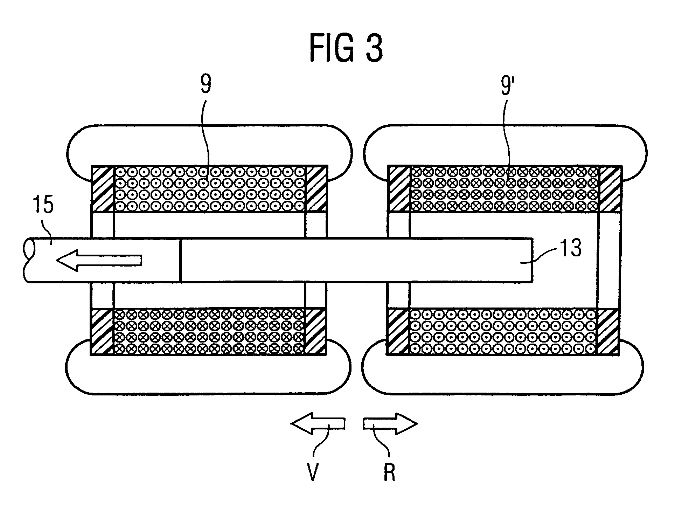

Der Linearantrieb 5, der nach dem Tauchspulenprinzip arbeitet, kann, wie Fig. 3 zeigt, mehrere Spulen aufweisen, beispielsweise zwei in Reihe geschaltete Spulen 9, 9' mit unterschiedlichen Wicklungsrichtungen, so dass zwei Elektromagnete mit entgegengesetzter Magnetflussrichtung entstehen, wie dies beispielsweise in der US 5 321 226 beschrieben ist. Der Permanentmagnet am hinteren Abschnitt 13 ragt in beide Spulen 9, 9' hinein und ist durch die Spulen 9, 9' in beide Richtungen verschiebbar.

In der in Fig. 1 gezeigten sogenannten Grundstellung der Antriebsachse 11 ist diese in vollständig zurückgezogenem Zustand dargestellt, in welchem sie an einem stimseitigen Anschlag 21 anliegt.

Das Wegmesssystem 7 ist dazu da, die Lage der Antriebsachse 11 zu bestimmen. Das Wegmesssystem 7 steht mit einer Steuereinheit 23 in Verbindung.

Im Bereich des Abschnitts 15 der Antriebsachse greift über einen Flansch 25 eine Kolbenstange 27 einer Kolben-Zylinder-Einheit 29 an der Antriebsachse 11 an. Mit 31 ist der am Gehäuse befestigte Zylinder und mit 33 der Kolben bezeichnet. Die Kolben-Zylinder-Einheit 29 ist eine hydraulische oder pneumatische Einheit, die als wahlweise zuschaltbare Einrichtung wirkt. Die Wirkungsrichtung der Kolben-Zylinder-Einheit 29 ist, je nach Schaltzustand, die Vorschubrichtung V oder die Rückzugsrichtung R. Über die Steuereinheit 23, die ein Ventil, z.B. ein Servo-Druckregelventil, beinhalten kann, kann die Kolben-Zylinder-Einheit 29 betrieben werden. Durch die Kolben-Zylinder-Einheit 29 wird ein struktureller Kraftflussweg zwischen der Antriebsachse 11 und dem Gehäuse 3 geschaffen. Die Kolben-Zylinder-Einheit 29 kann mehrere Funktionen übernehmen, beispielsweise eine Dämpfungseinrichtung bilden, mit der die Positionierung der Antriebsachse exakter und schneller erfolgt. Darüber hinaus kann sie auch die Antriebsachse 11 in Richtung R verfahren, wenn der Linearantrieb 5 entsprechend betätigt ist, oder sie kann dem Linearantrieb 5 eine variable Gegenkraft entgegensetzen.

Das Wegmesssystem 7 ist so mit der Steuerungseinheit 23 gekoppelt und die Steuerungseinheit 23 ist so ausgebildet, dass sie über das Wegmesssystem 7 ermitteln kann, ob sich die Antriebsache 11 in der horizontalen Ebene bewegt oder schräg zu dieser steht, was zur Folge hätte, dass das Eigengewicht der Antriebsachse und der ihr zugeordneten, an ihr befestigten Teile (hier der Bolzen 19) zu einer Verschiebung der Antriebsachse 11 führen würde.

Die in Fig. 1 dargestellte Bolzenschweißvorrichtung arbeitet folgendermaßen:

Die Schweißvorrichtung wird zu einem nicht dargestellten Werkstück, beispielsweise einem Fahrzeugblech zugestellt. Während des Zustellens der Schweißvorrichtung, die beispielsweise ein Schweißkopf sein kann, welcher an einem Roboterarm befestigt ist, kann die Antriebsachse 11 in der in Fig. 1 gezeigten Grundstellung sein. In dieser Stellung wird die Antriebsachse ausschließlich über die Kolben-Zylinder-Einheit gehalten, so dass die Spulen 9 nicht stromdurchflossen sind oder nur einen geringen Stromfluss aufweisen, wodurch auch keine oder nur eine minimale Kraft in Vorschubrichtung erzeugt wird. Die Wärmeentwicklung ist deshalb in nicht betätigtem Zustand sehr gering. Wenn der Roboter die Schweißvorrichtung nahe an das Werkstück herangebracht hat, wird die Antriebsachse 11 in Vorschubrichtung V bewegt, bis die Spitze des Schweißbolzens 19 die Werkstückoberfläche kontaktiert. Bei diesem Vorgang werden die Spulen 9 unter Spannung gesetzt und der Zylinder drucklos geschaltet, so dass er dem Verfahren der Antriebsachse 11 so gut wie keinen Widerstand entgegensetzt. Ein gewisser Mindestwiderstand kann aber auch nützlich sein, beispielsweise wenn die Antriebsachse 11 mit dem Schweißbolzen 19 voraus nach unten, abweichend von der horizontalen Ebene gerichtet ist. Dann würde sich die Antriebsachse 11 aufgrund ihres Eigengewichts selbst verschieben. Um dies zu vermeiden, kann der Arbeitsraum links vom Kolben so unter Druck gesetzt werden, dass die Kolben-Zylinder-Einheit 29 eine Gegenkraft auf die Antriebsachse 11 in Richtung R ausübt, die die durch das Eigengewicht hervorgerufene Verschiebekraft annähernd oder exakt kompensiert. Hierzu ist es notwendig, dass die über die Kolben-Zylinder-Einheit 29 auf die Antriebsachse 11 aufgebrachte Kraft in ihrer Größe variiert werden kann, was z.B. durch Vorsehen einer oder mehrerer servohydraulischer oder servopneumatischer Ventile erfolgen kann.

Wird die Schweißvorrichtung umgekehrt, mit dem Schweißbolzen 19 voraus nach oben gehalten (Überkopfschweißen), so würde das Eigengewicht der Antriebsachse 11 die Antriebsachse 11 in die Grundstellung drängen. Das bedeutet, es ist eine hohe elektrische Energie notwendig, damit der elektromagnetische Linearantrieb 5 die Antriebsachse 11 in Vorschubrichtung V verstellen kann. Diese elektrische Energie wird dadurch verringert, dass beispielsweise der Arbeitsraum im Zylinder rechts vom Kolben 33 stärker Druck beaufschlagt wird als der linke Arbeitsraum, so dass die Kolben-Zylinder-Einheit das Eigengewicht der Antriebsachse 11 kompensiert oder zumindest die Verstellung in Vorschubrichtung V unterstützt.

Nachdem die Werkstückoberfläche taktiert wurde, wird die Schweißspannung angelegt und die Antriebsachse 11 Weg gesteuert um eine definierte Strecke in Richtung R in eine Soll- oder Zwischenposition verfahren. Dabei wird durch Hubzündung ein Lichtbogen erzeugt. Zur Schaffung eines hohen Qualitätsstandards beim Schweißen ist es erforderlich, dass der Abstand Werkstück zu Schweißbolzen möglichst genau eingehalten wird. Darüber hinaus ist es vorteilhaft, wenn der Schweißbolzen möglichst schnell in diese Soll-Position verfahren werden kann, damit die Taktzeit gering gehalten wird. Beim Verfahren der Antriebsachse 11 in Richtung R in diese Soll-Position wird in beiden Arbeitsräumen ein gewisser Druck aufgebaut, damit die Kolben-Zylinder-Einheit 29 als hydraulischer oder pneumatischer Dämpfer wirkt. Damit wird verhindert, dass sich die Antriebsachse 11 langsam in die Soll-Position einschwingt; zumindest wird dieses Einschwingen stark reduziert. Die Soll-Position wird damit schnell und exakt angefahren. In dieser Soll-Position kann die Antriebsachse 11 verharren. Die Kolben-Zylinder-Einheit 29 hält die Antriebsachse 11 dabei in Position, so dass die Spulen 9 nicht stromdurchflossen sind. Die Ansteuerung der Kolben-Zylinder-Einheit 29 und Spulen 9 erfolgt erneut über die Steuereinheit 23. Das beschriebene Verfahren kann aber in diesem Punkt auch so ausgebildet sein, dass vom Kolben 33 eine geringe Kraft in Richtung R aufgebracht wird und vom Linearantrieb 5 eine gleich große Gegenkraft in Vorschubrichtung V.

Wenn die Antriebsachse 11 in Vorschubrichtung V durch Betätigung des Linearantriebs 5 bewegt wird, erfolgt diese Bewegung vorzugsweise weggesteuert. Der Bolzen 19 taucht in die Schmelze ein und wird am Werkstück befestigt. Vor dem Verfahren der Antriebsachse 11 muss der Zylinder noch drucklos geschaltet werden. Der Zylinder ist im Übrigen dann drucklos, wenn die Antriebsachse 11 in der horizontalen Ebene liegt und das Schweißwerkzeug nicht bewegt wird; ist die Antriebsachse 11 jedoch schräg zur horizontalen Ebene, kann die Kolben-Zylinder-Einheit 29 so angesteuert werden, dass das Eigengewicht der Antriebsachse 11 durch sie kompensiert wird, so dass auch beim Vorschub weniger elektrische Antriebsenergie notwendig ist.

Die nach dem zuvor beschriebenen Verfahren arbeitende Bolzenschweißvorrichtung hat als zusammenfassend folgende wesentlichen Vorteile:

Der Linearantrieb 5 für die Antriebsachse 11 kann in jeder für eine gewisse Zeit zu haltenden Stellung abgeschaltet werden oder der Stromfluss kann reduziert werden, wodurch sich die Wärmeentwicklung insgesamt reduziert.

Bei einer Schrägstellung der Antriebsachse zur horizontalen Ebene wird die Kolben-Zylinder-Einheit entgegen des Eigengewichts der Antriebsachse samt der mit ihr gekoppelten Teile entsprechend angesteuert, was ebenfalls zu einer geringeren Wärmeentwicklung führt, da der Linearantrieb 5 weniger elektrische Energie benötigt.

Die Reproduzierbarkeit des Schweißvorgangs wird in allen Lagen verbessert, da das Eigengewicht der Antriebsachse 11 durch die Kolben-Zylinder-Einheit 29 kompensiert wird.

Bei der Positionierung der Antriebsachse 11 dient die Kolben-Zylinder-Einheit 29 als Dämpfungseinrichtung. Dies führt dazu, dass das Einschwingverhalten bei der Positionierung der Antriebsachse 11 minimiert wird.

Vorzugsweise ist die Kolben-Zylinder-Einheit 29 eine pneumatische Einheit, denn durch eine pneumatische Einheit lässt sich ein noch geringerer Widerstand beim Verschieben der Antriebsachse 11 und Verschieben des Kolbens 33 realisieren als bei einer hydraulischen Einheit, bei der das Druckfluid verdrängt werden muss.

Die in Fig. 2 dargestellte Ausführungsform entspricht funktional in Wesentlichen der in Fig. 1 dargestellten, so dass die bereits beschriebenen Teile, sofern sie gleiche Funktion haben, die bereits eingeführten Bezugszahlen tragen.

Bei der Ausführungsform nach Fig. 2 ist die Einrichtung, welche ebenfalls zuschaltbar ist und eine Kraft durch Schaffung eines strukturellen Kraftflussweges zwischen dem Gehäuse 3 und der Antriebsachse 11 erzeugt, eine Klemmeinrichtung 51. Die Klemmeinrichtung 51 weist eine hydraulische oder pneumatische Kolben-Zylinder-Einheit auf, die mit einem Ventil 56 gekoppelt ist, welches wiederum mit einer Steuereinheit 23 verbunden ist. Die Klemmeinrichtung 51 weist darüber hinaus einen am freien Ende der Kolbenstange angebrachten Andrückflansch 55 mit einem Gummibelag auf. Die Kolben-Zylinder-Einheit 53 wirkt im Gegensatz zu der Einheit 29 in Fig. 1 nicht parallel zur Vorschubrichtung V, sonder in radialer Richtung zur Vorschubrichtung V, d.h. auch in radialer Richtung zur Antriebsachse 11. Bei ausgefahrener Kolbenstange drückt der Belag des Andrückflansches 55 gegen die Außenumfangsfläche der Antriebsachse 11 im Bereich 15.

Die Kolben-Zylinder-Einheit kann abhängig davon, wie stark die von der Einheit 53 aufgebrachte Kraft ist, die Antriebsachse 11 in einer gewünschten Position klemmen oder eine solche Reibung verursachen, dass der Verschiebung der Antriebsachse 11 ein gewisser Widerstand entgegengesetzt wird, so dass die Klemmeinrichtung als Dämpfungseinrichtung wirkt, die ein Oszillieren der Antriebsachse 11 bei einer schräge Lage zur horizontalen Ebene oder ein Einschwingen der Antriebsachse 11 in einer Soll-Position minimiert.

Um möglichst viele dieser Möglichkeiten auszuschöpfen, muss die Kraft, die auf die Antriebsachse 11 aufgebracht wird, in ihrer Größe variiert werden, was durch ein Servo-Druckregelventil möglich ist.

Die Kolben-Zylinder-Einheit 53 kann so ausgebildet sein, dass ein beidseitig wirkender Kolben vorgesehen ist, indem die Arbeitsräume auf beiden Seiten des Kolbens mit Druckluft oder Hydraulikflüssigkeit versorgt werden. Es kann aber auch vorteilhaft sein, wenn nur ein einseitig wirkender Kolben vorgesehen ist, nämlich ein in Richtung zur Antriebsachse 11 wirkender Kolben. Die Rückstellkraft wird in diesem Fall durch eine zwischen einer Stirnwand des Zylinders und dem Kolben vorgesehene Feder bereitgestellt.

Die Kolben-Zylinder-Einheit 53 muss nicht zwingend an dem Gehäuse 3 befestigt sein, es ist auch möglich, sie an der Antriebsachse 11 zu befestigen. Die Kolbenstange ist in diesem Fall so weit ausfahrbar, dass sie gegen das Gehäuse 3 drückt, wobei auch in diesem Zusammenhang wieder gilt, dass auch ein gehäusefestes Teil oder stationäres Teil unter den Begriff Gehäuse fallen soll.

Ebenso können, dies gilt auch für die Ausführungsform nach Fig. 1, die Spulen 9 auf der Antriebsachse 11 angebracht sein, die von einem oder mehreren ringförmigen Permanentmagneten umgeben sind, welche gehäusefest angeordnet sind.

Die in Fig. 2 dargestellte Ausführungsform arbeitet wie die in Fig. 1 dargestellte, so dass im Folgenden das Arbeitsverfahren verkürzt wiedergegeben werden kann.

In der in Fig. 2 dargestellten Grundstellung wird durch die Steuerungseinheit 23 sichergestellt, dass die Spulen 9 nicht stromdurchflossen sind. Das Ventil 56 wird entsprechend angesteuert, so dass der Kolben nach oben gefahren ist, bis der Andrückflansch 55 gegen die Antriebsachse 11 drückt und diese in der Stellung klemmt. Die erzeugte Reibkraft wirkt einer Verschiebung der Antriebsachse in Vorschubrichtung V entgegen.

Nach dem Zustellen zum Werkstück wird die Kolbenstange nach unten gefahren, falls die Antriebsachse 11 während des Zustellens in der horizontalen Ebene liegt. An die Spulen 9 wird eine Spannung angelegt, und die Antriebsachse 11 verfährt in Vorschubrichtung V bis sie die Werkstückoberfläche kontaktiert. Anschließend fährt die Antriebsachse 11 Weg gesteuert um eine bestimmte Strecke zurück und befindet sich in der Zwischenposition.

Es kann vorteilhaft sein, dass die Kolben-Zylinder-Einheit 53 beim Zurückfahren eine gewisse Bremskraft erzeugt. Diese soll ein Einpendeln der Antriebsachse 11 in die Zwischenposition minimieren oder ganz verhindern. Hierzu wird nur eine gewisse Bremskraft (Reibkraft) durch den nach oben gefahrenen Kolben erzeugt, wobei die Kraft nicht so groß ist wie beim Fixieren der Antriebsachse 11 in einer Position. Sobald die Warteposition erreicht ist, wird die Klemmkraft erhöht, so dass die Antriebsachse 11 durch die Kolben-Zylinder-Einheit 53 lagesicher gehalten wird. Die Spulen 9 werden nicht mehr stromdurchflossen.

Nach der Lichtbogenzündung wird die Klemmung aufgehoben und der Schweißbolzen durch den Linearantrieb 5 in Vorschubrichtung V bewegt.

Auch bei Schrägstellung der Antriebsachse 11 kann die Kolben-Zylinder-Einheit 53 jederzeit so eingesetzt werden, dass die Antriebsachse 11 lagegesichert gehalten wird.

Wenn, z.B. bei der Ausführungsform nach Fig. 2, die Kolben-Zylinder-Einheit die Antriebsachse 11 klemmt und der Gummibelag am Andrückflansch 55 an der Antriebsachse 11 anliegt, wird die elektrische Energie, die durch die Spulen 9 strömt, reduziert. Dies kann beispielsweise dadurch erfolgen, dass der sogenannte Positionstoleranzbereich der Antriebsachse (auch Regelfenster genannt), welcher in der Steuereinheit 23 abgespeichert wird, vergrößert wird. Normalerweise wird während des Schweißvorgangs und des Positionierens nur eine Lageabweichung von ± 0,1 mm für die Antriebsachse 11 zugestanden, wobei die Spulen sofort nachregeln, wenn die Lageabweichung größer wird. Bei geklemmter Antriebsachse 11 kann aufgrund der Elastizität des Gummis noch eine gewisse axiale Verschiebung auftreten, die aber toleriert werden kann. Deshalb wird der Positionstoleranzbereich beispielsweise auf ± 5 mm vergrößert, das heißt, es wird zwar zu minimalen Nachregelungen kommen, auch wenn die Antriebsachse sich noch innerhalb des Toleranzbereichs befindet, die elektrische Energie ist aber aufgrund des vergrößerten Toleranzbereichs deutlich geringer, weshalb sich die Bolzenschweißvorrichtung auch nicht so stark erwärmt, wie dies bei gleichbleibend kleinem Toleranzbereich der Fall wäre.

Zu betonen ist auch, dass mittels der Kolben-Zylinder-Einheit 29 in Fig. 1 die Antriebsachse 11 in Richtung R bewegt werden könnte, damit die Spulen 9 bei Bewegung in Richtung R weniger oder überhaupt nicht mehr stromdurchflossen sind.

Die Positionierung der Antriebsachse 11 mittels der Kolben-Zylinder-Einheit oder, allgemein, mittels der zuschaltbaren Einrichtung, ist auch auf eine Bolzenschweißvorrichtung übertragbar, bei der die Bewegung in Richtung V mittels einer vorspannbaren Feder erfolgt. Auch hier wäre bei vorgespannter Feder der Linearantrieb entlastet, wenn die Positionierung mittels der zuschaltbaren Einheit erfolgt.

Die Abluft der Kolben-Zylinder-Einheit 29, 53 kann auch zur Kühlung der Spulen 9, 9' verwendet werden oder es kann Druckluft zu den Spulen 9, 9' geleitet werden, wenn sich diese zu stark erwärmen.

## Patentansprüche

1. Verfahren zum Anschweißen eines Bolzens (19) an einem Werkstück mittels einer Bolzenschweißvorrichtung,
die ein Gehäuse (3),
wenigstens eine mit dem zu verschweißenden Bolzen (19) verbundene Antriebsachse (11) und
wenigstens einen elektromagnetischen, axial wirkenden Linearantrieb (5) mit wenigstens einer Spule (9) aufweist, **gekennzeichnet durch** folgenden Schritt:
beim Positionieren der Antriebsachse (11) wird eine zuschaltbare Kraft **durch** Schaffung eines strukturellen Kraftflussweges zwischen Antriebsachse (11) und Gehäuse (3) auf die Antriebsachse (11) aufgebracht,
wobei die Kraft einer Verschiebung der Antriebsachse (11) wenigstens in Vorschubrichtung (V) einen Widerstand entgegengesetzt.

2. Verfahren nach Anspruch 1, **dadurch gekennzeichnet, dass** mittels der zuschaltbaren Kraft die Antriebsachse (11) in einer Grundstellung der Antriebsachse (11) lagesicher positioniert wird.

3. Verfahren nach Anspruch 1 oder 2, **dadurch gekennzeichnet, dass** mittels der zuschaltbaren Kraft die Antriebsachse (11) in einer zwischen einer Grundstellung und einer Endstellung, die durch eine vollständig ausgefahrene Antriebsachse definiert ist, liegenden Zwischenstellung gehalten wird.

4. Verfahren nach einem der vorhergehenden Ansprüche, **dadurch gekennzeichnet, dass** die Größe der Kraft variiert werden kann.

5. Verfahren nach einem der vorhergehenden Ansprüche, **dadurch gekennzeichnet, dass** die Kraft wenigstens dann aufgebracht wird, wenn die Antriebsachse (11) zu der horizontalen Ebene geneigt ist.

6. Verfahren nach Anspruch 5, **dadurch gekennzeichnet, dass** dann, wenn die Antriebsachse (11) mit dem Bolzen (19) voraus nach unten und/oder nach oben gerichtet ist, eine solche Kraft über den Kraftflussweg auf die Antriebsachse (11) aufgebracht wird, dass diese Kraft die durch das Eigengewicht der Antriebsachse (11) samt der zusammen mit ihr verschobenen Teile verursachte Verschiebekraft teilweise oder vollständig kompensiert.

7. Verfahren nach einem der vorhergehenden Ansprüche, **dadurch gekennzeichnet, dass** ein Wegmesssystem (7) zur Erfassung des Verstellweges der Antriebsachse (11) verwendet wird und dass das Wegmesssystem (7) zur Bestimmung der Lage der Antriebsachse (11) bezüglich der horizontalen Ebene verwendet wird.

8. Verfahren nach einem der vorhergehenden Ansprüche, **dadurch gekennzeichnet, dass** die Kraft dann zugeschaltet ist, wenn sich die Antriebsachse (11) in Richtung zu einer vorbestimmten Soll-Position bewegt.

9. Verfahren nach einem der vorhergehenden Ansprüche, **dadurch gekennzeichnet, dass** die Kraft dann zugeschaltet wird und die Antriebsachse (11) lagesicher positioniert, wenn das Schweißwerkzeug, das die Antriebsachse (11) aufweist, relativ zum Werkstück verfahren wird.

10. Verfahren nach einem der Ansprüche 2, 3, 6 oder 9, **dadurch gekennzeichnet, dass** bei zugeschalteter Kraft dem Linearantrieb (5) weniger elektrische Energie zugeführt wird als ohne Kraft.

11. Verfahren nach Anspruch 10, **dadurch gekennzeichnet, dass** dann, wenn die zuschaltbare Kraft die Antriebsachse (11) in einer Position lagesicher hält, dem Linearantrieb (5) keine oder nur eine geringe elektrische Energie zugeführt wird.

12. Verfahren nach Anspruch 11, **dadurch gekennzeichnet, dass** dann, wenn die zuschaltbare Kraft die Antriebsachse (11) in einer Position lagesicher hält, ein in einer Steuerung der Bolzenschweißvorrichtung für den Linearantrieb abgespeicherter Positionstoleranzbereich, innerhalb dem sich die Antriebsachse (11) befinden muss, vergrößert wird.

13. Verfahren nach einem der vorhergehenden Ansprüche, **dadurch gekennzeichnet, dass** die Kraft eine Klemmkraft ist, die zwischen der Antriebsachse (11) und dem Gehäuse (3) erzeugt wird.

14. Verfahren nach einem der vorhergehenden Ansprüche, **dadurch gekennzeichnet, dass** ein hydraulischer, pneumatischer oder elektrischer Antrieb die Kraft aufbringt.

15. Verfahren nach einem der vorhergehenden Ansprüche, **dadurch gekennzeichnet, dass** die Kraft entgegengesetzt zur Vorschubrichtung (V) des Linearantriebs (5) auf die Antriebsachse (11) aufgebracht wird.

16. Verfahren nach einem der Ansprüche 1 bis 14, **dadurch gekennzeichnet, dass** die Kraft quer zur Vorschubrichtung (V) des Linearantriebs auf die Antriebsachse (11) aufgebracht wird.

17. Verfahren nach einem der vorhergehenden Ansprüche, **dadurch gekennzeichnet, dass** die Kraft relativ zur Vorschubrichtung (V) des Linearantriebs (5) so dosiert ist, dass sie eine Dämpfungsfunktion beim Verschieben der Antriebsachse (11) in eine Soll-Position erfüllt.

18. Bolzenschweißvorrichtung, insbesondere zur Durchführung des Verfahrens nach einem der vorhergehenden Ansprüche,
mit wenigstens einer mit dem zu verschweißenden Bolzen (19) verbundenen Antriebsachse (11),
wenigstens einem axial wirkenden Linearantrieb (5) mit wenigstens einer Spule (9), wobei die Antriebsachse (11) durch den Linearantrieb (5) verschoben werden kann,
**gekennzeichnet durch**
eine zuschaltbare Einrichtung, die an der Antriebsachse (11) oder dem Gehäuse (3) vorgesehen ist und die in zugeschaltetem Zustand an dem Gehäuse (3) bzw. an der Antriebsachse (11) angreift und eine Kraft auf die Antriebsachse (11) ausübt, die einer Verschiebung der Antriebsachse (11) wenigstens in Vorschubrichtung (V) einen Widerstand entgegensetzt.

19. Bolzenschweißvorrichtung nach Anspruch 18, **dadurch gekennzeichnet, dass** die Einrichtung die Größe des Widerstands verändern kann.

20. Bolzenschweißvorrichtung nach einem der Ansprüche 18-19, **dadurch gekennzeichnet, dass** die Einrichtung eine quer zur Antriebsachse (11) wirkende Klemmeinrichtung (51) ist.

21. Bolzenschweißvorrichtung nach einem der Ansprüche 18-19, **dadurch gekennzeichnet, dass** die Einrichtung eine Dämpfungseinrichtung ist, die in Vorschubrichtung (V) und/oder in einer entgegengesetzten Richtung (R) wirkt.

22. Bolzenschweißvorrichtung nach einem der Ansprüche 18-21, **dadurch gekennzeichnet, dass** die Einrichtung eine Kraft aufbringen kann, die die Antriebsachse (11) in jeder Lage der Antriebsachse (11) relativ zur horizontalen Ebene in einer gewünschten Position lagefest halten kann.

23. Bolzenschweißvorrichtung nach einem der Ansprüche 18-22, **dadurch gekennzeichnet, dass** die Einrichtung eine hydraulische oder pneumatische Kolben-Zylinder-Einheit (29; 53) ist.

24. Bolzenschweißvorrichtung nach Anspruch 23, **dadurch gekennzeichnet, dass** die Kolben-Zylinder-Einheit (53) mit einem Ventil (56) gekoppelt ist.

25. Bolzenschweißvorrichtung nach Anspruch 24, **dadurch gekennzeichnet, dass** das Ventil ein Servoventil ist.

26. Bolzenschweißvorrichtung nach einem der Ansprüche 18 bis 23, **dadurch gekennzeichnet**, das die Einrichtung einen elektrischen Antrieb aufweist.

27. Bolzenschweißvorrichtung nach einem der Ansprüche 18-26, **gekennzeichnet durch** eine Steuerungseinheit (23), die die Spule (9) und die Einrichtung steuert.

28. Bolzenschweißvorrichtung nach Anspruch 27, **dadurch gekennzeichnet, dass** ein Wegmesssystem (7) vorgesehen ist, welches mit der Steuerungseinheit (23) gekoppelt ist.

29. Bolzenschweißvorrichtung nach einem der Ansprüche 18-28, **dadurch gekennzeichnet, dass** die Antriebsachse Teil des Linearantriebs (5) ist, in die Spule (9) ragt und mit wenigstens einem Permanentmagneten (13) versehen ist.

30. Bolzenschweißvorrichtung nach Anspruch 29, **dadurch gekennzeichnet, dass** der Linearantrieb wenigstens zwei miteinander verbundene und in entgegengesetzten Richtungen gewickelte Spulen (9) aufweist und wenigstens ein Permanentmagnet, der mit der Antriebsachse gekoppelt ist, in die Spulen (9) ragt.

## Claims

1. Method of welding a stud (19) to a workpiece by means of a stud welding apparatus which has a housing (3),
at least one drive shaft (11) associated with the stud (19) to be welded and
at least one electromagnetic, axially acting, linear drive (5) having at least one
coil (9), **characterised by** the following step:
during positioning of the drive shaft (11), a force which can be switched in is exerted on the drive shaft (11) as a result of creation of a structural force flow path between the drive shaft (11) and the housing (3),
the force providing a resistance against displacement of the drive shaft (11) at least in the advancing direction (V).

2. Method according to claim 1, **characterised in that**, by means of the force that can be switched in, the drive shaft (11) is positioned securely, as regards its location, in a home position of the drive shaft (11).

3. Method according to claim 1 or 2, **characterised in that**, by means of the force that can be switched in, the drive shaft (11) is held in an intermediate position lying between a home position and an end position defined by a completely extended drive shaft.

4. Method according to one of the preceding claims, **characterised in that** the magnitude of the force can be varied.

5. Method according to one of the preceding claims, **characterised in that** the force is exerted at least when the drive shaft (11) is inclined with respect to the horizontal plane.

6. Method according to claim 5, **characterised in that**, when the drive shaft (11), with the stud (19) to the front, is oriented in a downward-facing and/or upward-facing direction, there is exerted on the drive shaft (11), by way of the force flow path, such a force that the said force partially or completely balances the displacing force caused by the deadweight of the drive shaft (11) together with the parts displaced therewith.

7. Method according to one of the preceding claims, **characterised in that** a displacement-measuring system (7) is used for ascertaining the travel of the drive shaft (11); and the displacement-measuring system (7) is used for determining the orientation of the drive shaft (11) with respect to the horizontal plane.

8. Method according to one of the preceding claims, **characterised in that** the force is switched in when the drive shaft (11) is moving towards a predetermined desired position.

9. Method according to one of the preceding claims, **characterised in that** the force is switched in and the drive shaft (11) is positioned securely, as regards its location, when the welding tool having the drive shaft (11) is being moved relative to the workpiece.

10. Method according to one of claims 2, 3, 6 or 9, **characterised in that** less electrical energy is supplied to the linear drive (5) when the force is switched in than without the force.

11. Method according to claim 10, **characterised in that**, when the force that can be switched in is holding the drive shaft (11) securely, as regards its location, in a position, no or only a small amount of electrical energy is supplied to the linear drive (5).

12. Method according to claim 11, **characterised in that**, when the force that can be switched in is holding the drive shaft (11) securely, as regards its location, in a position, a position tolerance range stored in a control of the stud welding apparatus for the linear drive, within which range the drive shaft (11) must be located, is made larger.

13. Method according to one of the preceding claims, **characterised in that** the force is a clamping force produced between the drive shaft (11) and the housing (3).

14. Method according to one of the preceding claims, **characterised in that** a hydraulic, pneumatic or electrical drive exerts the force.

15. Method according to one of the preceding claims, **characterised in that** the force is exerted on the drive shaft (11) in an opposite direction to the advancing direction (V) of the linear drive (5).

16. Method according to one of claims 1 to 14, **characterised in that** the force is exerted on the drive shaft (11) in a transverse direction to the advancing direction (V) of the linear drive.

17. Method according to one of the preceding claims, **characterised in that** the force relative to the advancing direction (V) of the linear drive (5) is so proportioned that it fulfils a damping function during displacement of the drive shaft (11) into a desired position.

18. Stud welding apparatus, especially for carrying out the method according to one of the preceding claims,
having at least one drive shaft (11) associated with the stud (19) to be welded and at least one axially acting, linear drive (5) having at least one coil (9), the drive shaft (11) being arranged to be displaced by the linear drive (5),
**characterised by** a device that can be switched in, provided at the drive shaft (11) or at the housing (3), which, in the switched-in state, acts on the housing (3) or on the drive shaft (11), respectively, and exerts a force on the drive shaft (11), which provides a resistance against displacement of the drive shaft (11) at least in the advancing direction (V).

19. Stud welding apparatus according to claim 18, **characterised in that** the device can vary the magnitude of the resistance.

20. Stud welding apparatus according to one of claims 18-19, **characterised in that** the device is a clamping device (51) acting in a transverse direction to the drive shaft (11).

21. Stud welding apparatus according to one of claims 18-19, **characterised in that** the device is a damping device which acts in the advancing direction (V) and/or in an opposite direction (R).

22. Stud welding apparatus according to one of claims 18-21, **characterised in that** the device can exert a force which can hold the drive shaft (11) fixedly, as regards its location, in a desired position when the drive shaft (11) is in any orientation relative to the horizontal plane.

23. Stud welding apparatus according to one of claims 18-22, **characterised in that** the device is a hydraulic or pneumatic piston-cylinder unit (29; 53).

24. Stud welding apparatus according to claim 23, **characterised in that** the piston-cylinder unit (53) is coupled with a valve (56).

25. Stud welding apparatus according to claim 24, **characterised in that** the valve is a servo valve.

26. Stud welding apparatus according to one of claims 18 to 23, **characterised in that** the device has an electrical drive.

27. Stud welding apparatus according to one of claims 18-26, **characterised by** a control unit (23) which controls the coil (9) and the device.

28. Stud welding apparatus according to claim 27, **characterised in that** a displacement-measuring system (7) is provided, which is coupled with the control unit (23).

29. Stud welding apparatus according to one of claims 18-28, **characterised in that** the drive shaft is part of the linear drive (5), projects into the coil (9) and is provided with at least one permanent magnet (13).

30. Stud welding apparatus according to claim 29, **characterised in that** the linear drive has at least two coils (9) connected to one another and wound in opposite directions; and at least one permanent magnet coupled with the drive shaft projects into the coils (9).

## Revendications

1. Procédé de soudage d'un goujon (19) sur une pièce au moyen d'un dispositif de soudage de goujons qui comporte un boîtier (3), au moins un axe d'entraînement (11) relié au goujon (19) à souder et au moins un dispositif d'entraînement linéaire (5) électromagnétique agissant axialement, avec au moins une bobine (9), **caractérisé par** les étapes suivantes :
au positionnement de l'axe d'entraînement (11), une force pouvant être mise en circuit est appliquée sur l'axe d'entraînement (11) par réalisation d'un parcours structural d'un flux des forces entre l'axe d'entraînement (11) et le boîtier (3), la force opposant une résistance à un déplacement de l'axe d'entraînement (11) au moins dans le sens d'avance (V).

2. Procédé selon la revendication 1, **caractérisé en ce qu'**au moyen de la force pouvant être mise en circuit, on positionne de manière sûre l'axe d'entraînement (11) dans une position de base de l'axe d'entraînement (11).

3. Procédé selon la revendication 1 ou 2, **caractérisé en ce qu'**au moyen de la force pouvant être mise en circuit, l'axe d'entraînement (11) est maintenu dans une position intermédiaire située entre une position de base et une position de fin de course qui est définie par un axe d'entraînement totalement extrait.

4. Procédé selon l'une des revendications précédentes, **caractérisé en ce qu'**on peut faire varier la grandeur de la force.

5. Procédé selon l'une des revendications précédentes, **caractérisé en ce que** la force est appliquée au moins lorsque l'axe d'entraînement (11) est incliné par rapport au plan horizontal.

6. Procédé selon la revendication 5, **caractérisé en ce que** lorsque l'axe d'entraînement (11) est dirigé avec le goujon (11) en premier vers le bas et/ou vers le haut, une force est appliquée, par le parcours du flux des forces, sur l'axe d'entraînement (11), de manière que cette force compense en partie ou entièrement la force de déplacement provoquée par le poids propre de l'axe d'entraînement (11) avec les pièces déplacées avec celui-ci.

7. Procédé selon l'une des revendications précédentes, **caractérisé en ce qu'**on utilise un système de mesure de distance (7) pour détecter la distance de déplacement de l'axe d'entraînement (11), et **en ce que** le système de mesure de distance (7) est utilisé pour déterminer la position de l'axe d'entraînement (11) par rapport au plan horizontal.

8. Procédé selon l'une des revendications précédentes, **caractérisé en ce que** la force est mise en circuit lorsque l'axe d'entraînement (11) se déplace en direction d'une position de consigne prédéterminée.

9. Procédé selon l'une des revendications précédentes, **caractérisé en ce que** la force est mise en circuit et l'axe d'entraînement (11) est positionné de manière sûre lorsque l'outil de soudage, qui comporte l'axe d'entraînement (11), est déplacé par rapport à la pièce.

10. Procédé selon l'une des revendications 2, 3, 6 ou 9, **caractérisé en ce que** dans le cas où la force est mise en circuit, on envoie au dispositif d'entraînement linéaire (5) une quantité d'énergie électrique moindre qu'en l'absence de force.

11. Procédé selon la revendication 10, **caractérisé en ce que** lorsque la force pouvant être mise en circuit maintient l'axe d'entraînement (11) dans une position sûre, aucune énergie électrique ou seulement un quantité réduite est envoyée au dispositif d'entraînement linéaire (5).

12. Procédé selon la revendication 11, **caractérisé en ce que** lorsque la force pouvant être mise en circuit maintient l'axe d'entraînement (11) dans une position sûre, une zone de tolérance de position, à l'intérieur de laquelle doit se trouver l'axe d'entraînement (11), mémorisée dans une commande du dispositif de soudage de goujons pour le dispositif d'entraînement linéaire, est agrandie.

13. Procédé selon l'une des revendications précédentes, **caractérisé en ce que** la force est une force de serrage qui est produite entre l'axe d'entraînement (11) et le boîtier (3).

14. Procédé selon l'une des revendications précédentes, **caractérisé en ce qu'**un dispositif d'entraînement hydraulique, pneumatique ou électrique applique la force.

15. Procédé selon l'une des revendications précédentes, **caractérisé en ce que** la force est appliquée dans le sens contraire au sens d'avance (V) du dispositif d'entraînement linéaire (5), sur l'axe d'entraînement (11).

16. Procédé selon l'une des revendications 1 à 14, **caractérisé en ce que** la force est appliquée sur l'axe d'entraînement (11) transversalement à la direction d'avance (V) du dispositif d'entraînement linéaire.

17. Procédé selon l'une des revendications précédentes, **caractérisé en ce que** la force est dosée par rapport au sens d'avance (V) du dispositif d'entraînement linéaire, de manière à assurer une fonction d'amortissement pendant le déplacement de l'axe d'entraînement dans une position de consigne.

18. Dispositif de soudage de goujons, en particulier pour la mise en oeuvre du procédé selon l'une des revendications précédentes, comportant au moins un axe d'entraînement (11) relié au goujon (19) à souder, au moins un dispositif d'entraînement linéaire (5) agissant axialement avec au moins une bobine (9), l'axe d'entraînement (11) pouvant être déplacé par le dispositif d'entraînement linéaire (5),
**caractérisé par** un mécanisme pouvant être mis en circuit, qui est prévu sur l'axe d'entraînement (11) ou sur le boîtier (3) et qui, à l'état mis en circuit, agit sur le boîtier (3) ou sur l'axe d'entraînement (11) et exerce sur l'axe d'entraînement (11) une force qui oppose une résistance à un déplacement de l'axe d'entraînement (11) au moins dans le sens d'avance (V).

19. Dispositif de soudage de goujons selon la revendication 18, **caractérisé en ce que** le mécanisme peut faire varier la grandeur de la résistance.

20. Dispositif de soudage de goujons selon l'une des revendications 18 ou 19, **caractérisé en ce que** le mécanisme est un mécanisme de serrage (51) agissant transversalement à l'axe d'entraînement (11).

21. Dispositif de soudage de goujons selon l'une des revendications 18 ou 19, **caractérisé en ce que** le mécanisme est un mécanisme d'amortissement qui agit dans le sens d'avance (V) et/ou dans un sens (R) opposé.

22. Dispositif de soudage de goujons selon l'une des revendications 18 à 21, **caractérisé en ce que** le mécanisme peut appliquer une force qui peut maintenir fixement dans une position voulue, l'axe d'entraînement (11) dans toute position de l'axe d'entraînement (11) par rapport au plan horizontal.

23. Dispositif de soudage de goujons selon l'une des revendications 18 à 22, **caractérisé en ce que** le mécanisme est une unité à cylindre et piston hydraulique ou pneumatique (29 ; 53).

24. Dispositif de soudage de goujons selon la revendication 23, **caractérisé en ce que** l'unité à cylindre et piston (53) est couplée à une soupape (56).

25. Dispositif de soudage de goujons selon la revendication 24, **caractérisé en ce que** la soupape est une servosoupape.

26. Dispositif de soudage de goujons selon l'une des revendications 18 à 23, **caractérisé en ce que** le mécanisme comporte un dispositif d'entraînement électrique.

27. Dispositif de soudage de goujons selon l'une des revendications 18 à 26, **caractérisé en ce que** l'unité de commande (23) commande la bobine (9) et le mécanisme.

28. Dispositif de soudage de goujons selon la revendication 27, **caractérisé en ce qu'**il est prévu un système de mesure de distance (7) qui est couplé à l'unité de commande (23).

29. Dispositif de soudage de goujons selon l'une des revendications 18 à 28, **caractérisé en ce que** l'axe d'entraînement fait partie du dispositif d'entraînement linéaire (5) dans lequel s'engage la bobine (9) et qui est pourvu d'au moins un aimant permanent (13).

30. Dispositif de soudage de goujons selon la revendication 29, **caractérisé en ce que** le dispositif d'entraînement linéaire comporte au moins deux bobines (9) reliées entre elles et enroulées en sens opposés, et au moins un aimant permanent qui est couplé à l'axe d'entraînement s'engage dans les bobines (9).
